# EUROPEAN PATENT APPLICATION

(11) **EP 4 472 177 A1**
(43) Date of publication of application: **04.12.2024**
(21) Application number: 23759119.3
(22) Date of filing: 20.02.2023
(51) Int. Cl.: H04M 1/00, G06F 3/041

(54) **TOUCH-CONTROL ASSEMBLY, TOUCH-CONTROL CHIP, AND TERMINAL DEVICE**

(30) Priority: 28.02.2022 CN 202210191356
(71) Applicant: Huawei Technologies Co., Ltd., Shenzhen, Guangdong 518129 (CN)
(72) Inventor: SHU, Lei, Shenzhen, Guangdong 518129 (CN)
(74) Representative: Thun, Clemens
(86) International application number: PCT/CN2023/077162
(87) International publication number: WO 2023/160494

(57) **Abstract**

This application discloses a touch component, a touch chip, and a terminal device, and relates to the touchscreen field, to improve a signal-to-noise ratio of a touchscreen. The touch component includes a touchscreen and a touch chip. The touchscreen includes a display panel, a first touch circuit, and a second touch circuit. The first touch circuit is located in a first touch zone of the display panel, and the second touch circuit is located in a second touch zone of the display panel. A plurality of detection pads of the first touch circuit and a plurality of detection pads of the second touch circuit are independently electrically connected to the touch chip. The touch chip outputs drive signals to a plurality of drive pads of the first touch circuit, and receives first detection signals from the plurality of detection pads of the first touch circuit, to detect a touch operation in the first touch zone. The touch chip outputs drive signals to a plurality of drive pads of the second touch circuit, and receives second detection signals from the plurality of detection pads of the second touch circuit, to detect a touch operation in the second touch zone.

## Description

This application claims priority to Chinese Patent Application No. 202210191356.2, filed with the China National Intellectual Property Administration on February 28, 2022 and entitled "TOUCH COMPONENT, TOUCH CHIP, AND TERMINAL DEVICE", which is incorporated herein by reference in its entirety.

### TECHNICAL FIELD

This application relates to the touchscreen field, and in particular, to a touch component, a touch chip, and a terminal device.

### BACKGROUND

More terminal devices (for example, a tablet computer and a mobile phone) use a foldable screen or a large-sized touchscreen, causing an increasing size of the touchscreen and exponentially increasing noise output by the touchscreen. As a result, a signal-to-noise ratio (a ratio of an effective signal to noise) of the touchscreen is reduced. This affects touch performance of the touchscreen, and may generate an accidental touch operation.

### SUMMARY

Embodiments of this application provide a touch component, a touch chip, and a terminal device, to improve a signal-to-noise ratio of a touchscreen.

To achieve the foregoing objectives, the following technical solutions are used in embodiments of this application.

According to a first aspect, a touch component is provided, including a touchscreen and a touch chip. The touchscreen includes a display panel, a first touch circuit, and a second touch circuit. The first touch circuit is located in a first touch zone of the display panel, and the second touch circuit is located in a second touch zone of the display panel. The first touch circuit includes a plurality of drive pads and a plurality of detection pads, and the second touch circuit includes a plurality of drive pads and a plurality of detection pads. The plurality of detection pads of the first touch circuit and the plurality of detection pads of the second touch circuit are independently electrically connected to the touch chip. The plurality of drive pads of the first touch circuit and the plurality of drive pads of the second touch circuit are independently electrically connected to the touch chip. The touch chip is configured to: output drive signals to the plurality of drive pads of the first touch circuit, and receive first detection signals from the plurality of detection pads of the first touch circuit, where the first detection signal is used to detect a touch operation in the first touch zone. The touch chip is further configured to: output drive signals to the plurality of drive pads of the second touch circuit, and receive second detection signals from the plurality of detection pads of the second touch circuit, where the second detection signal is used to detect a touch operation in the second touch zone.

The touch component provided in this embodiment of this application is applicable to a medium- or large-sized touchscreen (for example, a touchscreen of a tablet computer or a notebook computer) and a foldable screen (for example, a touchscreen of a foldable mobile phone), and has low manufacturing costs. In addition, because a plurality of touch circuits are obtained through division, and each touch circuit has an independent detection pad and an independent drive pad, a length of the detection pad in a single touch circuit is reduced, and load and generated noise of the detection pad are reduced by times, so that a signal-to-noise ratio (a ratio of an effective signal to noise) of the touchscreen is greatly improved. This improves touch performance of the touchscreen.

In a possible implementation, the touchscreen is a foldable screen that is folded along a folding line, and the first touch zone and the second touch zone are located on two sides of the folding line. After the touchscreen is folded, when the first touch circuit detects a touch operation of a user in the first touch zone, the second touch circuit may be in an invalid state. In other words, the second touch circuit does not detect a touch operation of the user in the second touch zone, and an operation of a palm or a finger in the second touch zone does not become noise. In this way, noise output by the touchscreen can be reduced.

In a possible implementation, the plurality of detection pads of the first touch circuit are electrically isolated from the plurality of detection pads of the second touch circuit. In other words, detection pads of different touch circuits do not affect each other, and output detection signals are independent.

In a possible implementation, the plurality of drive pads of the first touch circuit are electrically isolated from the plurality of drive pads of the second touch circuit. In other words, drive pads of different touch circuits do not affect each other, and received drive signals are independent.

In a possible implementation, the touch chip includes a first group of drive pins, a second group of drive pins, a first group of detection pins, a second group of detection pins, a control circuit, and a plurality of analog front end circuits. The first group of drive pins are electrically connected to the plurality of drive pads of the first touch circuit, the first group of detection pins are electrically connected to the plurality of detection pads of the first touch circuit, the second group of drive pins are electrically connected to the plurality of drive pads of the second touch circuit, and the second group of detection pins are electrically connected to the plurality of detection pads of the second touch circuit. The control circuit is configured to: output the drive signals to the plurality of drive pads of the first touch circuit by using the first group of drive pins, and receive the first detection signals from the plurality of detection pads of the first touch circuit by using the first group of detection pins. The control circuit is further configured to: output the drive signals to the plurality of drive pads of the second touch circuit by using the second group of drive pins, and receive the second detection signals from the plurality of detection pads of the second touch circuit by using the second group of detection pins. The plurality of analog front end circuits are configured to perform analog-to-digital conversion on the first detection signals and/or the second detection signals. The touch chip may implement separate control on the independent touch circuits in the touchscreen, and obtain the detection signals from the independent touch circuits respectively.

In a possible implementation, the touch chip further includes a plurality of selection switches, and the control circuit is further configured to control the plurality of selection switches to select the first group of detection pins or the second group of detection pins to be electrically connected to input ends of the plurality of analog front end circuits. Controlled by the control circuit, the plurality of selection switches may select one group of detection pins to be electrically connected to the input ends of the plurality of analog front end circuits, to implement time division multiplexing of the analog front end circuits, reduce a quantity of analog front end circuits, reduce costs of the touch chip, and reduce an area of the touch chip.

According to a second aspect, a touch chip is provided, including a first group of drive pins, a second group of drive pins, a first group of detection pins, a second group of detection pins, a control circuit, and a plurality of analog front end circuits. The first group of drive pins are configured to be electrically connected to a plurality of drive pads of a first touch circuit of a touchscreen, the first group of detection pins are configured to be electrically connected to a plurality of detection pads of the first touch circuit, the second group of drive pins are configured to be electrically connected to a plurality of drive pads of a second touch circuit of the touchscreen, and the second group of detection pins are configured to be electrically connected to a plurality of detection pads of the second touch circuit. The control circuit is configured to: output drive signals to the plurality of drive pads of the first touch circuit by using the first group of drive pins, and receive first detection signals from the plurality of detection pads of the first touch circuit by using the first group of detection pins. The control circuit is further configured to: output drive signals to the plurality of drive pads of the second touch circuit by using the second group of drive pins, and receive second detection signals from the plurality of detection pads of the second touch circuit by using the second group of detection pins. The plurality of analog front end circuits are configured to perform analog-to-digital conversion on the first detection signals and/or the second detection signals. The touch chip may implement separate control on the independent touch circuits in the touchscreen, and obtain the detection signals from the independent touch circuits respectively.

In a possible implementation, the touch chip further includes a plurality of selection switches, and the control circuit is configured to control the plurality of selection switches to select the first group of detection pins or the second group of detection pins to be electrically connected to input ends of the plurality of analog front end circuits. Controlled by the control circuit, the plurality of selection switches may select one group of detection pins to be electrically connected to the input ends of the plurality of analog front end circuits, to implement time division multiplexing of the analog front end circuits, reduce a quantity of analog front end circuits, reduce costs of the touch chip, and reduce an area of the touch chip.

According to a third aspect, a terminal device is provided, including a touchscreen according to any one of the first aspect and the implementations of the first aspect.

For technical effects of the third aspect, refer to the technical effects of the first aspect. Details are not described herein again.

### BRIEF DESCRIPTION OF DRAWINGS

FIG. 1 is a diagram of a structure of a terminal device according to an embodiment of this application;
FIG. 2 is a diagram of a structure of an outwardly foldable screen according to an embodiment of this application;
FIG. 3 is a diagram of a structure of an inwardly foldable screen according to an embodiment of this application;
FIG. 4 is a diagram of a structure and a working principle of a touchscreen according to an embodiment of this application;
FIG. 5 is a diagram of a structure of a touchscreen and a touch chip according to an embodiment of this application;
FIG. 6 is a diagram of a structure of another touchscreen and touch chip according to an embodiment of this application;
FIG. 7 is a diagram of a structure of still another touchscreen and touch chip according to an embodiment of this application;
FIG. 8 is a diagram of a structure of yet another touchscreen and touch chip according to an embodiment of this application; and
FIG. 9 is a diagram of a structure of another outwardly foldable screen according to an embodiment of this application.

### DESCRIPTION OF EMBODIMENTS

It should be noted that the terms "first", "second", and the like in embodiments of this application are merely used to distinguish between features of a same type, and cannot be understood as indicating relative importance, a quantity, a sequence, or the like.

A term such as "example" or "for example" in embodiments of this application is used to represent giving an example, an illustration, or descriptions. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The terms "coupling" and "connection" in embodiments of this application should be understood in a broad sense. For example, the terms may refer to a physical direct connection, or may refer to an indirect connection implemented by using an electronic component, for example, a connection implemented by using a resistor, an inductor, a capacitor, or another electronic component.

An embodiment of this application provides a terminal device. The terminal device may be a device having a wireless transceiver function, and the terminal device may be mobile or fixed. The terminal device may be deployed on land (for example, indoor or outdoor, handheld, or vehicle-mounted), or may be deployed on water (for example, on a ship), or may be deployed in the air (for example, on an airplane, a balloon, or a satellite). The terminal device may be user equipment (user equipment, UE), an access terminal, a terminal unit, a subscriber unit (subscriber unit), a terminal station, a mobile station (mobile station, MS), a remote station, a remote terminal, a mobile device, a wireless communication device, a terminal agent, a terminal apparatus, or the like in a 4th generation (4th generation, 4G) network, a 5th generation (5th generation, 5G) network, or a future evolved public land mobile network (public land mobile network, PLMN). For example, the terminal device may be a mobile phone, a tablet computer, a notebook computer, a smart band, a smart watch, an earphone, a smart speaker, a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), or the like. A specific type, structure, and the like of the terminal device are not limited in embodiments of this application.

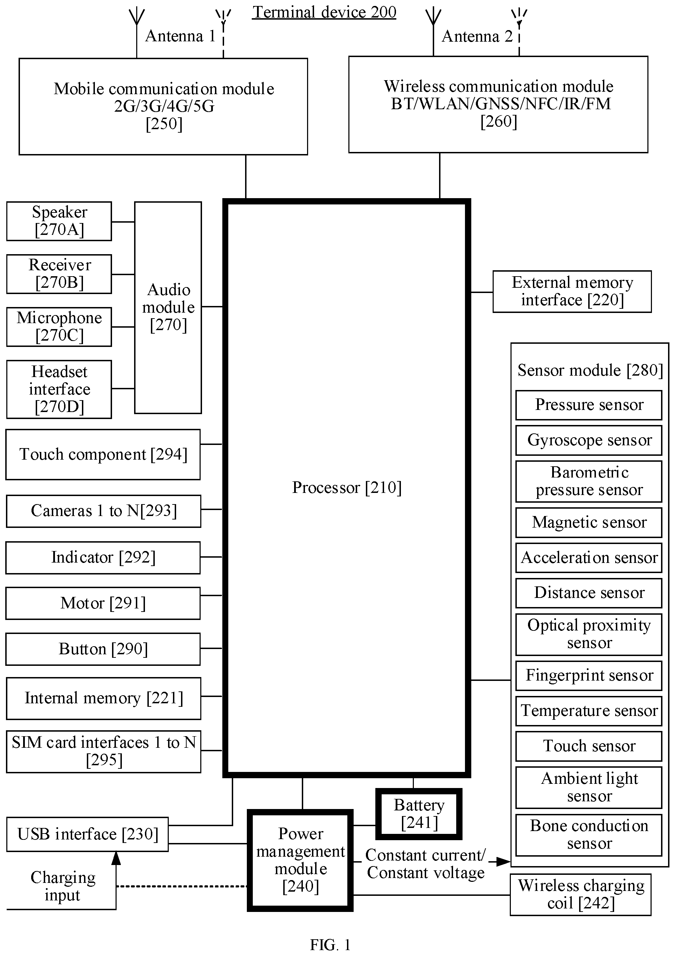

An example in which the terminal device is a mobile phone is used. FIG. 1 shows a possible structure of the terminal device. A terminal device 200 may include a processor 210, an external memory interface 220, an internal memory 221, a universal serial bus (universal serial bus, USB) interface 230, a power management module 240, a battery 241, a wireless charging coil 242, an antenna 1, an antenna 2, a mobile communication module 250, a wireless communication module 260, an audio module 270, a speaker 270A, a receiver 270B, a microphone 270C, a headset interface 270D, a sensor module 280, a button 290, a motor 291, an indicator 292, a camera 293, a touch component 294, a subscriber identity module (subscriber identity module, SIM) card interface 295, and the like.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of the present invention does not constitute a specific limitation on the terminal device 200. In some other embodiments of this application, the terminal device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include a central processing unit (central processing unit, CPU), an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent components, or may be integrated into one or more processors. For example, the processor 210 may be the application processor AP. Alternatively, the processor 210 may be integrated into a system-on-chip (system-on-chip, SoC). Alternatively, the processor 210 may be integrated into an integrated circuit (integrated circuit, IC) chip. The processor 210 may include an analog front end (analog front end, AFE) and a micro processing unit (micro-controller unit, MCU) in the IC chip.

The controller may be a nerve center and a command center of the terminal device 200. The controller may generate an operation control signal based on instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access and reduces waiting time of the processor 210, to improve system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface.

It may be understood that an interface connection relationship between the modules shown in this embodiment of the present invention is merely an example for description, and does not constitute a structural limitation on the terminal device 200. In some other embodiments of this application, the terminal device 200 may alternatively use an interface connection mode different from the interface connection modes in the foregoing embodiments, or use a combination of a plurality of interface connection modes.

The power management module 240 is configured to receive a charging input from a charger. The charger may be a wireless charger (for example, a wireless charging cradle of the terminal device 200 or another device that can wirelessly charge the terminal device 200), or may be a wired charger. For example, the power management module 240 may receive the charging input of the wired charger by using the USB interface 230. The power management module 240 may receive a wireless charging input by using the wireless charging coil 242 of an electronic device.

When charging the battery 241, the power management module 240 may further supply power to the electronic device. The power management module 240 receives input from the battery 241, and supplies power to the processor 210, the internal memory 221, the external memory interface 220, the touch component 294, the camera 293, the wireless communication module 260, and the like. The power management module 240 may be further configured to monitor parameters of the battery 241, such as a battery capacity, a quantity of battery cycles, and a battery health status (current leakage and impedance). In some other embodiments, the power management module 240 may alternatively be disposed in the processor 210.

A wireless communication function of the terminal device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the terminal device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the terminal device 200. The wireless communication module 260 may provide a wireless communication solution that is applied to the terminal device 200 and that includes wireless local area networks (wireless local area networks, WLANs) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. In some embodiments, the antenna 1 of the terminal device 200 is coupled to the mobile communication module 250, and the antenna 2 is coupled to the wireless communication module 260, so that the terminal device 200 may communicate with a network and another device by using a wireless communication technology.

The terminal device 200 implements a display function by using the GPU, the touch component 294, the application processor, and the like. The GPU is a microprocessor for graphics processing, and is connected to the touch component 294 and the application processor. The GPU is configured to: perform mathematical and geometric computation, and render an image. The processor 210 may include one or more GPUs that execute program instructions to generate or change displayed information.

The terminal device 200 may implement a photographing function by using the ISP, the camera 293, the video codec, the GPU, the touch component 294, the application processor, and the like. The ISP is configured to process data fed back by the camera 293. In some embodiments, the ISP may be disposed in the camera 293. The camera 293 is configured to capture a static image or a video. In some embodiments, the terminal device 200 may include one or N cameras 293, where N is a positive integer greater than 1.

The external memory interface 220 may be configured to connect to an external memory card, for example, a micro SanDisk (micro SanDisk, Micro SD) card, to extend a storage capability of the terminal device 200. The external memory card communicates with the processor 210 through the external memory interface 220, to implement a data storage function. For example, files such as music and videos are stored in the external storage card.

The internal memory 221 may be configured to store computer-executable program code, and the executable program code includes instructions. The processor 210 executes various function applications and data processing of the terminal device 200 by running the instructions stored in the internal memory 221. In addition, the internal memory 221 may include a high-speed random access memory, and may further include a non-volatile memory, for example, at least one magnetic disk storage device, a flash storage device, or a universal flash storage (universal flash storage, UFS).

The terminal device 200 may implement an audio function, for example, audio playback and recording, by using the audio module 270, the speaker 270A, the receiver 270B, the microphone 270C, the headset interface 270D, the application processor, and the like.

The audio module 270 is configured to convert digital audio information into an analog audio signal for output, and is also configured to convert an analog audio input into a digital audio signal. In some embodiments, the audio module 270 may be disposed in the processor 210, or some functional modules in the audio module 270 may be disposed in the processor 210. The speaker 270A, also referred to as a "horn", is configured to convert an audio electrical signal into a sound signal. The receiver 270B, also referred to as an "earpiece", is configured to convert an audio electrical signal into a sound signal. The microphone 270C, also referred to as a "mike" or a "mic", is configured to convert a sound signal into an electrical signal. At least one microphone 270C may be disposed in the terminal device 200. The headset interface 270D is configured to connect to a wired headset. The headset interface 270D may be a USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 290 includes a power button, a volume button, and the like. The button 290 may be a mechanical button, or may be a touch button. The terminal device 200 may receive a button input, and generate a button signal input related to a user setting and function control of the terminal device 200. The motor 291 may generate a vibration prompt. The motor 291 may be configured to provide an incoming call vibration prompt or a touch vibration feedback. The indicator 292 may be an indicator light, and may be configured to indicate a charging state and a battery power change, or may be configured to indicate a message, a missed call, a notification, or the like. The SIM card interface 295 is configured to connect to a SIM card. The SIM card may be inserted into the SIM card interface 295 or removed from the SIM card interface 295, to implement contact with or separation from the terminal device 200. The terminal device 200 may support one or N SIM card interfaces, where N is a positive integer greater than 1. The SIM card interface 295 may support a nano SIM (Nano SIM) card, a micro SIM (Micro SIM) card, a SIM card, and the like. In some embodiments, the terminal device 200 uses an embedded (embedded SIM, eSIM) card, and the eSIM card may be embedded in the terminal device 200, and cannot be separated from the terminal device 200.

The touch component 294 includes a touchscreen and a touch chip. The touchscreen includes a display panel, configured to display an image, a video, and the like. The touchscreen may further include a touch circuit, configured to receive a touch operation of a user. The touch chip is configured to: output a periodic drive signal to the touchscreen, receive a detection signal from the touchscreen, and detect a change of the signal when the user performs a touch operation on the touchscreen. In some implementations, the terminal device 200 may include one or more touch components 294. In some other implementations, the touchscreen in the touch component 294 may be a foldable screen

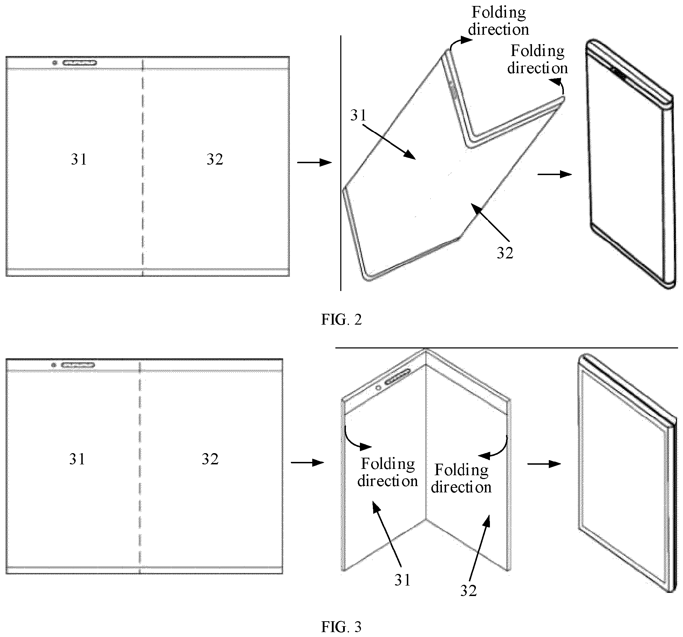

For example, as shown in FIG. 2 and FIG. 3, the display panel of the touchscreen may include a first touch zone 31 and a second touch zone 32. When the touchscreen is folded, the first touch zone 31 and the second touch zone 32 may be located in different planes. The touchscreen in FIG. 2 is folded outwards, so that the first touch zone 31 and second touch zone 32 are visible to the user after the touchscreen is folded, and the user can still perform a touch operation on the touchscreen. The touchscreen in FIG. 3 is folded inwards, so that the first touch zone 31 and the second touch zone 32 are opposite to each other after the touchscreen is completely folded. This helps protect the display panel of the touchscreen. A touchscreen provided in an embodiment of this application may be the outwardly foldable screen shown in FIG. 2, or may be applied to the inwardly foldable screen shown in FIG. 3.

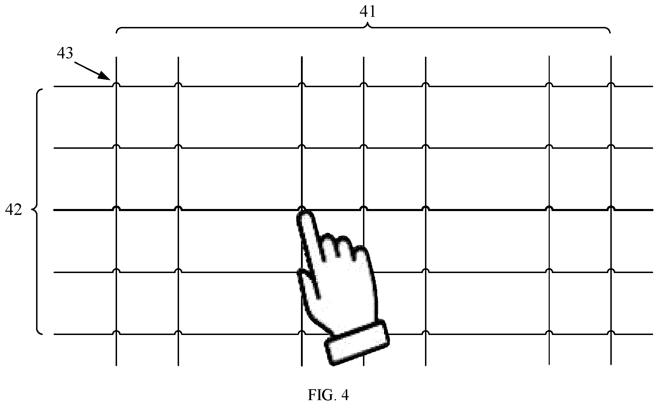

As shown in FIG. 4, an example in which the touchscreen is a capacitive screen is used. A touch circuit of the touchscreen includes a plurality of drive (drive, DRV) pads 41 and a plurality of detect (sense, SEN) pads 42. The plurality of drive pads 41 and the plurality of detection pads 42 are distributed in a cross manner. There is no electrical connection between the plurality of drive pads 41 and the plurality of detection pads 42, so that a touch point 43 in a capacitive form is formed at each cross point. The plurality of drive pads 41 input respectively periodic drive signals (for example, sine waves or square waves) from the touch chip, and that different drive pads 41 input drive signals is equivalent to scanning a position of a touch operation on a horizontal coordinate. Because the human body is a good conductor, when a finger of the user taps a position on the touchscreen (that is, a touch operation is generated), the finger and the touchscreen form a coupling capacitor, to change a capacitance value of a touch point 43 at the position. A detection signal (a voltage or a current) output by a detection pad 42 corresponding to the touch point 43 to the touch chip correspondingly changes. This is equivalent to determining a position of the touch operation on a vertical coordinate. In other words, the horizontal and vertical coordinates of the touch operation are identified based on the change of the capacitance value of the touch point 43.

After the outwardly foldable touchscreen shown in FIG. 2 is folded, a display panel on one side may not display content, but a touch zone (for example, the second touch zone 32) on the side is still in an effective state. The detection pad still detects noise of the touch zone, and an operation performed by a palm or a finger in the touch zone also becomes noise. In addition, an increasing size of the touchscreen and an increasing length of the detection pad cause exponentially increasing noise output by the detection pad of the touchscreen. As a result, a signal-to-noise ratio (a ratio of an effective signal to noise) of the touchscreen is reduced. This affects touch performance of the touchscreen, and may generate an accidental touch operation.

In view of this, in embodiments of this application, the touch circuit in the touchscreen is divided into a plurality of touch circuits, and each touch circuit includes an independent drive pad and an independent detection pad. This reduces a length of the drive pad in a single touch circuit, and reduces noise output by the detection pad of the touchscreen.

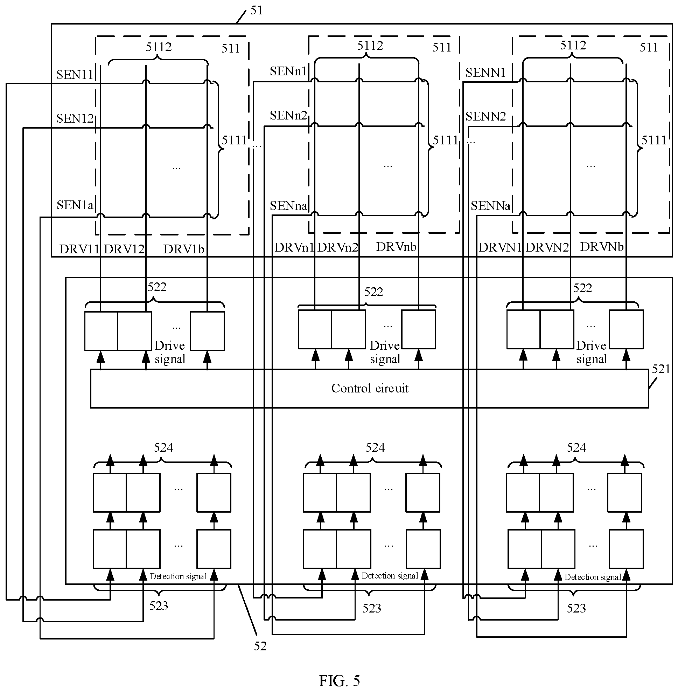

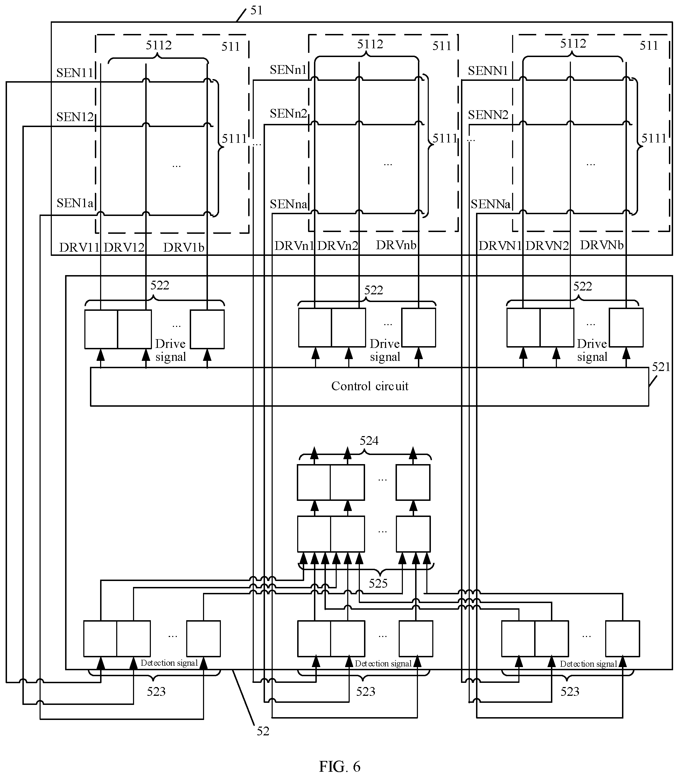

As shown in FIG. 5 and FIG. 6, a touch component provided in an embodiment of this application includes a touchscreen 51 and a touch chip 52.

The touchscreen 51 includes a display panel (not shown in the figure) and N touch circuits 511, where N is an integer greater than 1. The display panel includes N touch zones, and each touch circuit 511 is located in one touch zone. Each touch circuit 511 includes a plurality of drive pads 5111 and a plurality of detection pads 5112, quantities of drive pads 5111 included in different touch circuits 511 may be the same or different, and quantities of detection pads 5112 included in different touch circuits 511 may be the same or different. In this embodiment of this application, an example in which the touch circuit 511 includes b drive pads 5111 (for example, DRV11 to DRV1b, DRVn1 to DRVnb, and DRVN1 to DRVNb) and a detection pads 5112 (for example, SEN11 to SEN1a, SENn1 to SENna, and SENN1 to SENNa) is used, but it is not intended to be limited thereto. 1 ≤ n ≤ N, where n is an integer, and a and b are positive integers.

In each touch circuit 511, the plurality of drive pads 5111 and the plurality of detection pads 5112 are distributed in a touch zone in a cross manner without being electrically connected, so that a touch point in a capacitive form is formed at each cross point. In this embodiment of this application, the plurality of drive pads 5111 are arranged along a horizontal axis, and the plurality of detection pads 5112 are arranged along a vertical axis. However, this is not intended to be limited thereto. The plurality of drive pads 5111 may alternatively be arranged along the vertical axis, and the plurality of detection pads 5112 may alternatively be arranged along the horizontal axis. A plurality of drive pads 5111 belonging to different touch circuits 511 are not electrically connected to each other, and are independently electrically connected to the touch chip 52, so that the plurality of drive pads 5111 belonging to different touch circuits 511 are electrically isolated from each other Detection pads 5112 belonging to different touch circuits 511 are not electrically connected to each other, and are independently electrically connected to the touch chip 52, so that a plurality of detection pads 5112 belonging to different touch circuits 511 are electrically isolated from each other. In other words, the touch circuits 511 are independent of each other.

The touch chip 52 includes a control circuit 521, N groups of drive pins 522, N groups of detection pins 523, and a plurality of analog front end (analog front end, AFE) circuits 524. The N groups of drive pins 522 are respectively electrically connected to drive pads 5111 of the N touch circuits 511 (each group of drive pins 522 is electrically connected to a drive pad 5111 of one touch circuit 511), and the N groups of detection pins 523 are respectively electrically connected to detection pads 5112 of the N touch circuits 511 (each group of detection pins 523 is electrically connected to a detection pad 5112 of one touch circuit 511). The N groups of detection pins 523 are further electrically connected to input ends of the plurality of analog front end circuits 524.

Optionally, as shown in FIG. 6, the touch chip 52 further includes a plurality of selection switches 525. The N groups of detection pins 523 are electrically connected to the input ends of the plurality of analog front end circuits 524 by using the plurality of selection switches 525. Controlled by the control circuit 521, the plurality of selection switches 525 may select one group of detection pins 523 to be electrically connected to the input ends of the plurality of analog front end circuits 524, to implement time division multiplexing of the analog front end circuits 524, reduce a quantity of the analog front end circuits 524, reduce costs of the touch chip 52, and reduce an area of the touch chip 52.

The following describes a working principle of the touchscreen 51 and the touch chip 52.

The touchscreen 51 includes the N touch circuits 511. In each detection periodicity, the touch chip 52 outputs drive signals to one touch circuit 511, and detects detection signals output by the touch circuit 511. Therefore, a total of N detection periodicities are needed to complete sensing of a touch operation on the entire touchscreen 51.

In an n^{th} (where 1 ≤ n ≤ N, and n is an integer) detection periodicity, the control circuit 521 of the touch chip 52 outputs respectively periodic drive signals (for example, sine waves or square waves) to a plurality of drive pads 5111 of an n^{th} touch circuit 511 of the touchscreen 51 by using an n^{th} group of drive pins in the N groups of drive pins 522. The control circuit 521 may sequentially output the drive signals to the plurality of drive pads 5111 of the n^{th} touch circuit 511 in a polling manner, to scan a position of a touch operation on a horizontal coordinate.

When the finger of the user does not tap any position in a touch zone in which the n^{th} touch circuit 511 is located, detection signals (voltages or currents) output by a plurality of detection pads 5112 of the n^{th} touch circuit 511 to an n^{th} group of detection pins in the N groups of detection pins 523 of the touch chip 52 are the same. Because the human body is a good conductor, when the finger of the user taps any position in the touch zone in which the n^{th} touch circuit 511 is located, the finger and the touchscreen form a coupling capacitor, to change a capacitance value of a touch point at the position. A detection signal (a voltage or a current) output by a detection pad 5112 corresponding to the touch point correspondingly changes, and the plurality of analog front end circuits 524 of the touch chip 52 perform analog-to-digital conversion on the input detection signals to obtain digital signals. A processor of a terminal device may determine, based on the digital signals, the detection pad 5112 corresponding to the touch operation. This is equivalent to determining a position of the touch operation on a vertical coordinate. In combination of the position of the touch operation on the horizontal coordinate obtained through scanning, the positions of the horizontal and vertical coordinates of the touch operation may be determined.

Optionally, for the touch chip 52 in FIG. 6 further including the plurality of selection switches 525, in the n^{th} detection periodicity, the control circuit 521 may further control the plurality of selection switches 525 to select the n^{th} group of detection pins to be electrically connected to the input ends of the plurality of analog front end circuits 524, so that the plurality of analog front end circuits 524 can perform analog-to-digital conversion on detection signals input by the n^{th} group of detection pins to obtain digital signals.

The following describes a touch component by using an example in which a typical touchscreen includes two touch circuits.

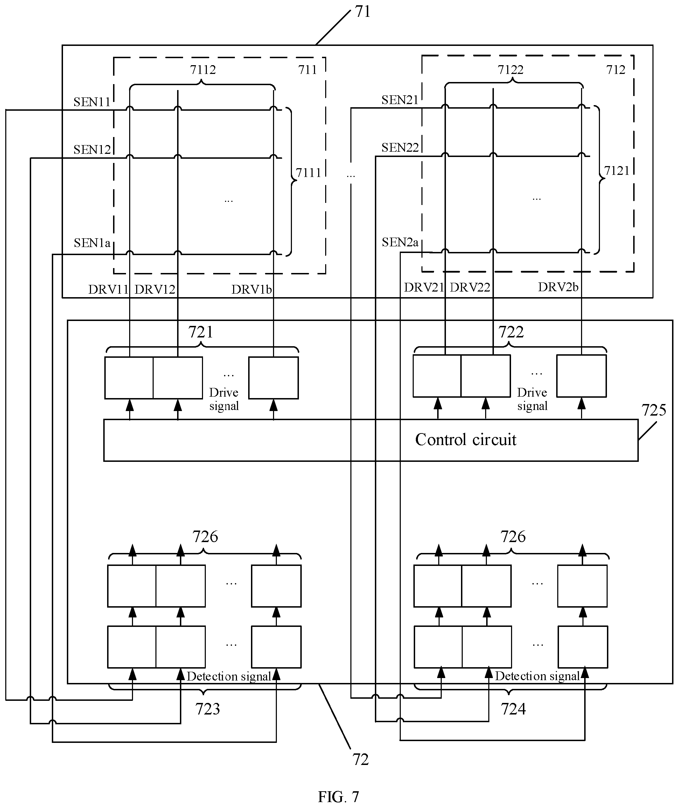

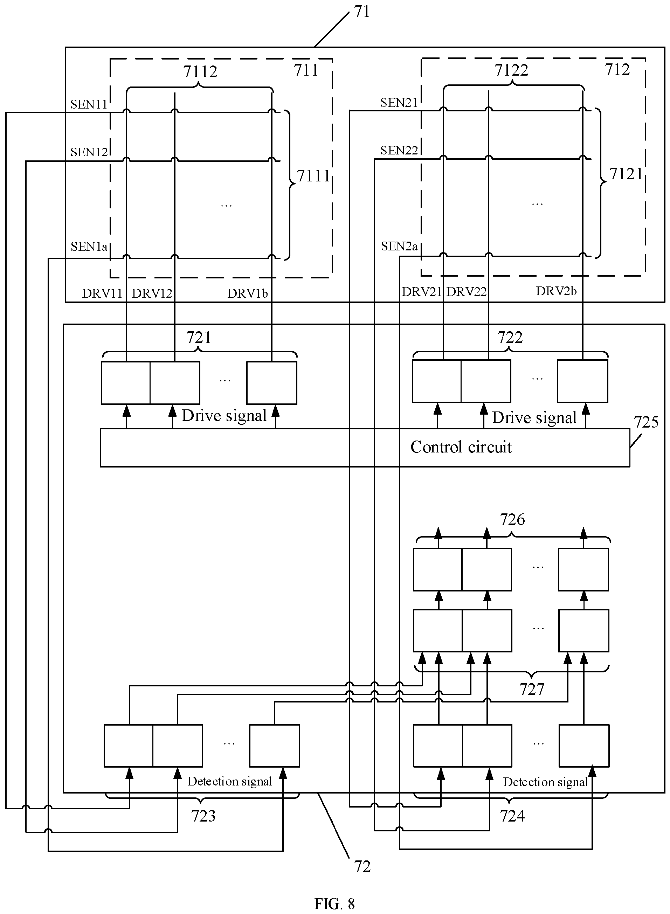

As shown in FIG. 7 and FIG. 8, a touchscreen 71 may include a first touch circuit 711 and a second touch circuit 712. The first touch circuit 711 includes a plurality of drive pads 7111 (for example, DRV11 to DRV1b) and a plurality of detection pads 7112 (for example, SEN11 to SEN1a). The second touch circuit 712 includes a plurality of drive pads 7121 (for example, DRV21 to DRV2b) and a plurality of detection pads 7122 (for example, SEN21 to SEN2a). The plurality of detection pads 7112 of the first touch circuit 711 and the plurality of detection pads 7122 of the second touch circuit 712 are independently electrically connected to a touch chip 72. The plurality of drive pads 7111 of the first touch circuit 711 and the plurality of drive pads 7121 of the second touch circuit 712 are electrically isolated from each other, and are independently electrically connected to the touch chip 72.

The touch chip 72 includes a first group of drive pins 721, a second group of drive pins 722, a first group of detection pins 723, a second group of detection pins 724, a control circuit 725, and a plurality of analog front end circuits 726. The first group of drive pins 721 are electrically connected to the plurality of drive pads 7111 of the first touch circuit 711, and the first group of detection pins 723 are electrically connected to the plurality of detection pads 7112 of the first touch circuit 711. The second group of drive pins 722 are electrically connected to the plurality of drive pads 7121 of the second touch circuit 712, and the second group of detection pins 724 are electrically connected to the plurality of detection pads 7122 of the second touch circuit 712.

The touch chip 72 outputs drive signals to the plurality of drive pads 7111 of the first touch circuit 711 by using the first group of drive pins 721 in a first detection periodicity, and receives first detection signals from the plurality of detection pads 7112 of the first touch circuit 711 by using the first group of detection pins 723. The first detection signal is used to detect a touch operation in a first touch zone in which the first touch circuit 711 is located. The touch chip outputs drive signals to the plurality of drive pads of the second touch circuit by using the second group of drive pins 722 in a second detection periodicity, and receives second detection signals from the plurality of detection pads 7122 of the second touch circuit 712 by using the second group of detection pins 724. The second detection signal is used to detect a touch operation in a second touch zone in which the second touch circuit 712 is located.

The plurality of analog front end circuits 726 are configured to perform analog-to-digital conversion on the first detection signals and/or the second detection signals.

Optionally, as shown in FIG. 8, the touch chip 72 further includes a plurality of selection switches 727. The control circuit 725 controls the plurality of selection switches 727 to select the first group of detection pins or the second group of detection pins to be electrically connected to input ends of the plurality of analog front end circuits.

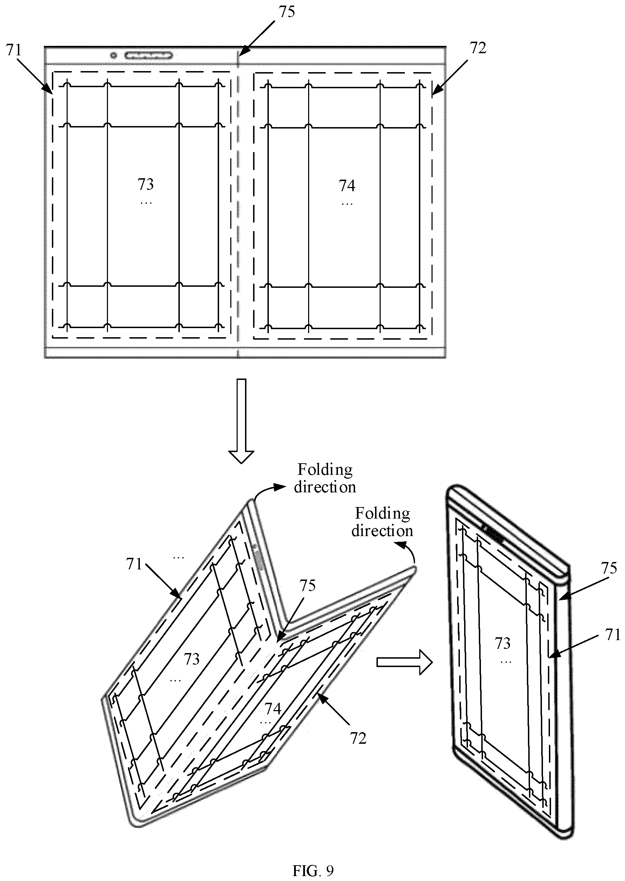

As shown in FIG. 9, the first touch circuit 711 may be located in a first touch zone 73 of a display panel of the touchscreen, and the second touch circuit 712 is located in a second touch zone 74 of the display panel of the touchscreen. Particularly, when the touchscreen is a foldable screen that is folded along a folding line 75, the first touch zone 73 and the second touch zone 74 may be located on two sides of the folding line 75. In other words, the first touch circuit 711 and the second touch circuit 712 may be located on the two sides of the folding line 75.

After the touchscreen is folded, when the first touch circuit 711 detects a touch operation of a user in the first touch zone 73, the second touch circuit 712 may be in an invalid state. In other words, the second touch circuit 712 does not detect a touch operation of the user in the second touch zone 74, and an operation of a palm or a finger in the second touch zone 74 does not become noise. In this way, noise output by the touchscreen can be reduced.

The touch component provided in this embodiment of this application is applicable to a medium- or large-sized touchscreen (for example, a touchscreen of a tablet computer or a notebook computer) and a foldable screen (for example, a touchscreen of a foldable mobile phone), and has low manufacturing costs. In addition, because a plurality of touch circuits are obtained through division, and each touch circuit has an independent detection pad and an independent drive pad, a length of the detection pad in a single touch circuit is reduced, and load and generated noise of the detection pad are reduced by times, so that a signal-to-noise ratio (a ratio of an effective signal to noise) of the touchscreen is greatly improved. This improves touch performance of the touchscreen.

The processor in this embodiment of this application may be a chip. For example, the processor may be a field programmable gate array (field programmable gate array, FPGA), an application-specific integrated chip (application-specific integrated circuit, ASIC), a system on chip (system-on-chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

The memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, the module division is merely logical function division and may be other division in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. Some or all the modules may be selected according to actual needs to achieve the objectives of the solutions of embodiments.

In addition, functional modules in embodiments of this application may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A touch component, comprising a touchscreen and a touch chip, wherein the touchscreen comprises a display panel, a first touch circuit, and a second touch circuit, the first touch circuit is located in a first touch zone of the display panel, the second touch circuit is located in a second touch zone of the display panel, the first touch circuit comprises a plurality of drive pads and a plurality of detection pads, and the second touch circuit comprises a plurality of drive pads and a plurality of detection pads;
the plurality of detection pads of the first touch circuit and the plurality of detection pads of the second touch circuit are independently electrically connected to the touch chip, and the plurality of drive pads of the first touch circuit and the plurality of drive pads of the second touch circuit are independently electrically connected to the touch chip;
the touch chip is configured to: output drive signals to the plurality of drive pads of the first touch circuit respectively, and receive first detection signals from the plurality of detection pads of the first touch circuit respectively, wherein the first detection signal is used to detect a touch operation in the first touch zone; and
the touch chip is further configured to: output drive signals to the plurality of drive pads of the second touch circuit, and receive second detection signals from the plurality of detection pads of the second touch circuit, wherein the second detection signal is used to detect a touch operation in the second touch zone.

2. The touch component according to claim 1, wherein the touchscreen is a foldable screen that is folded along a folding line, and the first touch zone and the second touch zone are located on two sides of the folding line.

3. The touch component according to claim 1 or 2, wherein the plurality of detection pads of the first touch circuit are electrically isolated from the plurality of detection pads of the second touch circuit.

4. The touch component according to any one of claims 1 to 3, wherein the plurality of drive pads of the first touch circuit are electrically isolated from the plurality of drive pads of the second touch circuit.

5. The touch component according to any one of claims 1 to 4, wherein the touch chip comprises a first group of drive pins, a second group of drive pins, a first group of detection pins, a second group of detection pins, a control circuit, and a plurality of analog front end circuits;
the first group of drive pins are electrically connected to the plurality of drive pads of the first touch circuit, the first group of detection pins are electrically connected to the plurality of detection pads of the first touch circuit, the second group of drive pins are electrically connected to the plurality of drive pads of the second touch circuit, and the second group of detection pins are electrically connected to the plurality of detection pads of the second touch circuit;
the control circuit is configured to: output the drive signals to the plurality of drive pads of the first touch circuit by using the first group of drive pins, and receive the first detection signals from the plurality of detection pads of the first touch circuit by using the first group of detection pins;
the control circuit is further configured to: output the drive signals to the plurality of drive pads of the second touch circuit by using the second group of drive pins, and receive the second detection signals from the plurality of detection pads of the second touch circuit by using the second group of detection pins; and
the plurality of analog front end circuits are configured to perform analog-to-digital conversion on the first detection signals and/or the second detection signals.

6. The touch component according to claim 5, wherein the touch chip further comprises a plurality of selection switches, and the control circuit is further configured to:
control the plurality of selection switches to select the first group of detection pins or the second group of detection pins to be electrically connected to input ends of the plurality of analog front end circuits.

7. A touch chip, comprising a first group of drive pins, a second group of drive pins, a first group of detection pins, a second group of detection pins, a control circuit, and a plurality of analog front end circuits, wherein
the first group of drive pins are configured to be electrically connected to a plurality of drive pads of a first touch circuit of a touchscreen, the first group of detection pins are configured to be electrically connected to a plurality of detection pads of the first touch circuit, the second group of drive pins are configured to be electrically connected to a plurality of drive pads of a second touch circuit of the touchscreen, and the second group of detection pins are configured to be electrically connected to a plurality of detection pads of the second touch circuit;
the control circuit is configured to: output drive signals to the plurality of drive pads of the first touch circuit by using the first group of drive pins, and receive first detection signals from the plurality of detection pads of the first touch circuit by using the first group of detection pins;
the control circuit is further configured to: output drive signals to the plurality of drive pads of the second touch circuit by using the second group of drive pins, and receive second detection signals from the plurality of detection pads of the second touch circuit by using the second group of detection pins; and
the plurality of analog front end circuits are configured to perform analog-to-digital conversion on the first detection signals and/or the second detection signals.

8. The touch chip according to claim 7, wherein the touch chip further comprises a plurality of selection switches, and the control circuit is configured to:
control the plurality of selection switches to select the first group of detection pins or the second group of detection pins to be electrically connected to input ends of the plurality of analog front end circuits.

9. A terminal device, comprising the touch component according to any one of claims 1 to 6.
